Europäisches Patentamt

European Patent Office

Office européen des brevets

(11) Numéro de publication: **0 263 753**
**B1**

(12) **FASCICULE DE BREVET EUROPEEN**

(45) Date de publication du fascicule du brevet: **06.02.91**

(51) Int. Cl.⁵: **G 01 N 35/06**

(21) Numéro de dépôt: **87402200.7**

(22) Date de dépôt: **05.10.87**

(54) Dispositif de prélèvement automatique de liquide dans un flacon.

(30) Priorité: **06.10.86 FR 8613875**

(43) Date de publication de la demande:
**13.04.88 Bulletin 88/15**

(45) Mention de la délivrance du brevet:
**06.02.91 Bulletin 91/06**

(84) Etats contractants désignés:
**BE CH DE ES FR GB IT LI NL SE**

(56) Documents cités:
**EP-A-0 061 317**
**DE-A-2 326 244**
**FR-A-2 136 707**
**FR-A-2 456 268**
**FR-A-2 514 504**
**US-A-3 788 177**

(73) Titulaire: **ABX , Société Anonyme dite**
**14/16 rue Baudin**
**F-92300 Levallois (FR)**

(72) Inventeur: **Champseix, Henri**
**4, avenue Andran**
**F-78360 Montesson (FR)**
Inventeur: **Champseix, Serge**
**29 bis, rue des Puiseux**
**F-78130 Les Mureaux (FR)**

(74) Mandataire: **Lhuillier, René et al**
**ARMENGAUD JEUNE CABINET LEPEUDRY 6,**
**rue du Fg. St-Honoré**
**F-75008 Paris (FR)**

EP 0 263 753 B1

**Description**

L'invention concerne un dispositif de prélèvement automatique de liquide dans un flacon et plus précisément un ensemble de perçage de bouchons de tubes de prélèvement de sang.

Dans les laboratoires d'analyses de biologie médicale, il existe maintenant des automates monobloc de faible encombremant qui permettent le comptage des éléments figurés du sang périphérique à partir d'un prélèvement de sang entier. Ces automates assurent automatiquement la détermination d'un certain nombre de paramètres tels que le nombre de leucocytes et d'hématies, le dosage de l'hémoglobine, etc. Pour cela les échantillons de sang doivent être transférés d'un tube de prélèvement vers l'intérieur de l'appareil où ils sont l'objet des mesures appropriées. A cet effet une aiguille est plongée dans le tube et aspire la quantité voulue de sang. Il faut ensuite que cette auguille soit rincée soigneusement, intérieurement et extérieurement avant la mesure suivante. On connaît certains types d'automates qui sont munis d'une aiguille fixe, reliée à un système d'aspiration; l'utlisateur présente alors de flacon de sang sous l'aiguille et commande un cycle de prélèvement. Puis après avoir dégagé et rebouché le flacon manuellement, il faut procéder au rinçage de l'aiguille.

Ces opérations qui doivent être réalisées avec le plus grand soin sont assez délicates, elles exigent la présence permanente de l'opérateur et ne sont pas très rapides. En outre puisque le flacon et le tube dans lequel s'effectue le prélèvement est en position normale, son ouverture étant dirigée vers le haut, l'extrémité de l'aiguille doit pouvoir pénétrer jusqu'au fond du flacon pour pouvoir aspirer les derniers millilitres de sang. Cela veut dire que l'aiguille peut tremper dans le sang sur une grande partie de sa hauteur, ce qui nécessite ensuite un rinçage plus important. De plus il est difficile de placer l'extrémité de l'aiguille au fond d'un flacon sans heurter ce dernier au risque de le briser. Pour ces multiples raisons, on a recherché un système de prélèvement plus automatisé, qui améliore les cadences et évite les inconvénients précités.

C'est ainsi que l'on s'est rendu compte de la nécessité d'utiliser des aiguilles manoeuvrées automatiquement qui prélèvent le sang dans un tube. Celui-ci vient se positionner à la demande en face de ladite aiguille, après avoir été repéré dans un support de stockage constitué par exemple d'un chariot mobile transversalement ou d'un carrousel rotatif. On connaît aussi le système qui consiste à prélever automatiquement le liquide dans un tube retourné à l'aide d'une aiguille qui traverse le bouchon du tube, ce dernier étant réalisé en une matière suffisamment souple pour rester étanche après le retrait de l'aiguille, comme décrit dans le EP—A—0061317 et le FR—A—25 14504. On peut ainsi ne faire pénétrer l'aiguille dans le sang que sur une faible partie de sa hauteur et en outre recueillir les derniers millimitres de sang subsistant dans le tube.

Pour que ces manoeuvres soient assurées rapidement dans les meilleures conditions d'hygiène, il convient que les bouchons des tubes soient donc percés de façon automatique et fiable à l'aide d'un dispositif qui soit associé aisément aux automates de comptage dont ils constituent un appareil d'appoint efficace.

Dans les systèmes connus comme par exemple dans le EP—A—0061317 précité, la tige de piston qui manoeuvre la pièce mobile portant l'aiguille de prélèvement sert elle-même de guide à cette pièce mobile, en association avec un autre guide, et la force exercée n'est pas centrée sur cette pièce mobile et se trouve en porte à faux c'est-à-dire que le déplacement de l'aiguille sous l'action de cette force décentrée, peut être perturbée par le jeu que peut prendre ladite pièce, entraînant éventuellement son coincement. D'autre part le système ainsi décrit met en oeuvre, un nombre important de pièces de profil compliqué, présentant un encombrement non négligeable au détriment du montage et du prix de revient de l'ensemble.

L'invention propose par conséquent un ensemble de perçage de bouchons permettant le prélèvement automatique de liquide dans un flacon et notamment du sang dans un tube, qui répond à ces exigences et qui évite les inconvénients propres aux systèmes connus.

C'est ainsi que l'invention a pour objet un dispositif de prélèvement automatique de liquide dans un flacon présenté retourné en face d'une aiguille de prélèvement destinée à percer le bouchon du flacon et pénétrer dans le liquide, comportant un support mobile de stockage d'une pluralité de flacons permettant de placer un flacon en bonne position par rapport à un ensemble de perçage de bouchons, ledit ensemble comportant un bloc mobile servant de support à une aiguille de prélèvement, qui se déplace sous l'action d'un vérin, un récipient de rinçage étant monté de façon fixe et traversé par l'aiguille, dispositif selon lequel ledit bloc mobile coulisse sur deux colonnes fixes de guidage entre lesquelles se déplace verticalement l'aiguille de prélèvement sous l'action d'un vérin à transmission de mouvement horizontal et selon lequel une entretoise fixe est montée en appui sur les deux colonnes, à leur partie supérieure, et sert de support au récipient de rinçage.

Selon une autre caractéristique de l'invention, au moins une pièce de renvoi de forme sensiblement triangulaire constitué l'organe de transmission du mouvement de la tige mobile du vérin en bloc mobile et s'articule sur un axe fixe lui-même monté sur une potence solidaire d'une platine support portant les colonnes de guidage, chaque pièce de renvoi coopérant avec le bloc mobile par l'intermédiaire d'un ergot constitué d'un roulement dans un évidement ovale prévu sur la paroi latérale du bloc mobile. On a ainsi une transmission d'un mouvement horizontal du vérin à un mouvement vertical du bloc mobile.

Le dispositif selon l'invention présente l'avantage d'être d'un encombrement réduit ce qui évite d'avoir à augmenter la hauteur de l'automate pour pouvoir le loger ou encore d'encombrer la face arrière du moyen de maintien des échantillons. Par ailleurs le dispositif de l'invention est facile à usiner et monter, donc d'un faible prix de revient, et il fonctionne de façon fiable puisque l'entraînement de l'élément mobile est assuré sans porte à faux ni effort latéral.

D'autres caractéristiques particulières et avantages de l'invention apparaîtront à la lecture de la description qui va suivre d'une forme de réalisation prise à titre d'exemple et faisant référence aux dessins annexés qui représentent:

figure 1 une vue schématique en élévation de l'ensemble de perçage en position repos;

figures 2 et 3, des vues en plan selon II—II et III—III de la figure 1;

figure 4 une vue schématique de l'ensemble de perçage en position de prélèvement;

figure 5 une vue en coupe selon la ligne V—V de la figure 1.

Le dispositif de prélèvement automatique comprend essentiellement un distributeur rotatif 1 de tubes ou flacons de prélèvement 2 disposé au-dessus d'un ensemble de perçage monté sur un socle 4. Un tube 2 sélectionné est automatiquement positionné comme représenté en position verticale et retournée, le bouchon 3 étant en partie basse. Sur une platine support 5 fixée au socle 4, sont montées une potence 9 et deux colonnes verticales de guidage 6. La potence 9 est munie d'un axe horizontal 7 grâce auquel pivotent deux pièces de renvoi 8 de formes sensiblement triangulaires montées de part et d'autres de la potence et dont chaque sommet reçoit un axe de pivotement et/ou d'articulation. Ces pièces de renvoi constituent les organes de transmission du mouvement entre un organe moteur que constitue un vérin 12 et une aiguille de prélèvement 21. Il y a ainsi transmission d'un mouvement horizontal du vérin à un mouvement vertical du bloc mobile. Pour assurer cette fonction les extrémités supérieures de chaque pièce de renvoi 8 tourillonnent par un axe horizontal 19 sur un palier 10 vissé sur la tige mobile ou piston 11 d'un vérin pneumatique 12. Ledit vérin alimenté en fluide par les flexibles 13, est articulé sur un étrier 14 lui-même solidaire du socle 4. Les extrémités inférieures de chaque pièce de renvoi 8 sont munies de roulements 15 qui coopèrent avec des évidements ovales 16 sur les deux parois latérales opposées d'un bloc mobile 17. Ce bloc mobile est muni de deux ouvertures verticales grâce auxquelles il est emmanché sur les colonnes de guidage 6, des guides à billes 18 étant prévus sur le bloc mobile pour favoriser le coulissement du bloc le long des colonnes. Le bloc mobile 17 porte en son centre une cavité 28 dans laquelle se positionne l'extrémité inférieure d'une butée 20 d'une aiguille de prélèvement 21, la butée 20 étant brasée sur l'aiguille 21 et ladite cavité se prolongeant par un puits 32 qui débouche à la partie inférieure du bloc mobile. Un manchon de blocage d'aiguille 22 rapporté au-dessus de la butée 20 est bloqué en position par une vis 30 qui traverse le bloc mobile 17. L'extrémité inférieure de l'aiguille 21 déborde du fond de la cavité 28 dans le puits 32 qui traverse le bloc mobile, et est raccordée à un conduit flexible 31 qui sort sous ledit bloc, et qui permet le transfert du fluide prélevé.

La partie haute des colonnes de guidage 6 est solidaire d'une entretoise fixe 23, fixée sur elles, qui se présente sous la forme d'une plaque rectangulaire percée d'un orifice central 24. L'orifice 24 débouche sur la face supérieure de l'entretoise au milieu d'une pièce 25 formant un guide pour l'aiguille de prélèvement lequel guide est maintenu à la partie supérieure de l'entretoise. L'entretoise 23 est fixée aux colonnes 6 par des vis-pointeau 29. Un récipient de rinçage 26, dont un orifice inférieur correspond à l'orifice 24 est fixé au-dessus de l'entretoise 23, et traversé de façon étanche par l'aiguille de prélèvement 21. Le récipient 26 est muni sur le côté d'un conduit d'alimentation et de vidange 27.

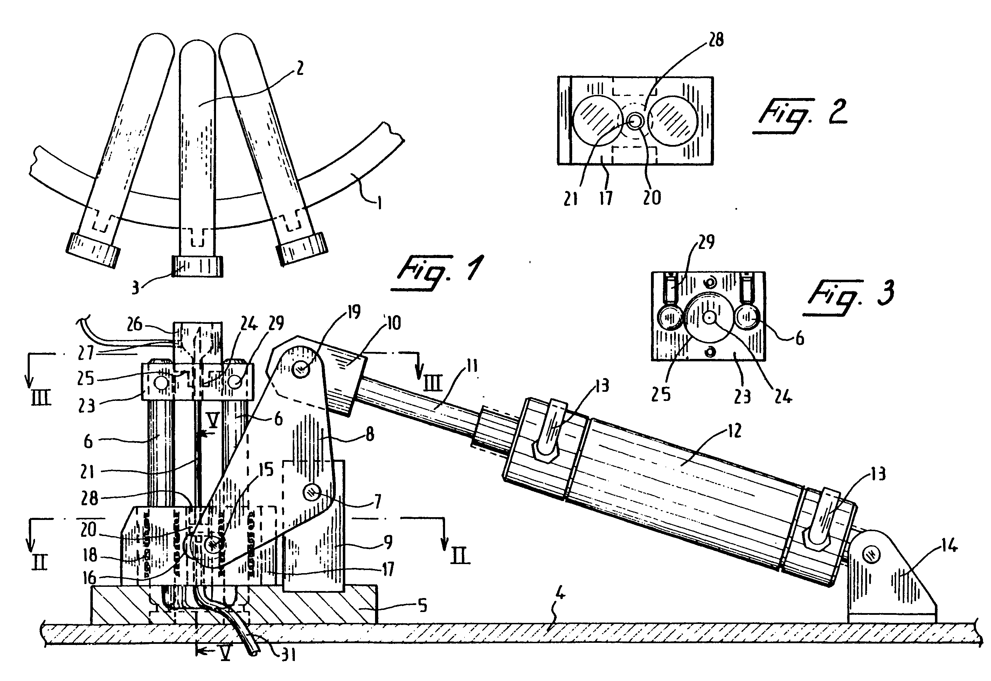

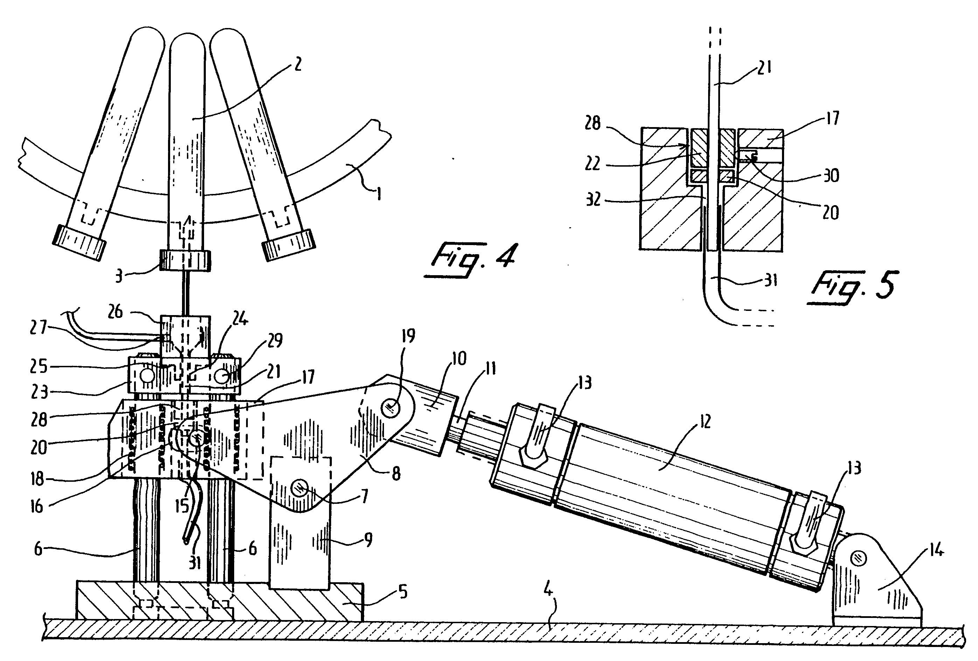

Lors d'une opération de prélèvement, un des tubes 2 porté par le distributeur rotatif est sélectionné par l'opérateur qui par exemple affiche sur un clavier d'indexation son numéro de repérage. Le distributeur tourne jusqu'à ce que le tube soit dans la position représentée à la figure 1. Pendant cette rotation la tige 11 du vérin 12 est déployée et le bloc mobile 17 est au repos en appui sur la platine-support 5. L'extrémité supérieure de l'aiguille 21 se trouve au niveau du récipient de rinçage 26. Quand le tube 2 s'est immobilisé en position verticale. L'ensemble de perçage est mis en oeuvre automatiquement comme l'illustre la figure 4. La tige 11 du vérin 12 se rétracte et par l'intermédiaire du palier 10 fait pivoter les pièces de renvoi 8 grâce à l'axe 7. Les roulements 15 coopérant avec les évidements 16, ce mouvement de pivotement entraîne la levée du bloc mobile 17 jusqu'à ce qu'il vienne à proximité de l'entretoise 23. Au cours de cette montée le roulement 15, du fait du débattement de l'extrémité des pièces de renvoi 8, se déplace à l'intérieur de l'évidement 16 transversalement aux colonnes 6. Le bloc mobile coulisse le long des colonnes de guidage 6, ce déplacement étant facilité par les guides à billes 18.

Le point d'application de la force de levée du bloc mobile se situant au milieu de ce dernier, il n'y a pas de porte à faux ni d'effort latéral, aussi le bloc peut-il coulisser aisément sur les colonnes de guidage, sans risque de coincement.

L'aiguille 21 solidaire du bloc mobile monte également au travers de l'orifice 24 et du guide 25. Elle traverse le bouchon 3 et son extrémité qui se trouve à l'intérieur du tube d'échantillon 2 permet le prélèvement du sang qui est pompé en passant au travers de l'aiguille et du conduit flexible 31. Puis l'ensemble de perçage revient à sa position initiale. L'extrémité supérieure de la seringue 21 est soumise à un rinçage dans le récipient 26 alimenté en fluide de rinçage par le conduit 27.

L'ensemble de l'appareil précédemment décrit est d'un encombrement réduit ce qui évite d'augmenter la hauteur totale de l'automate ou d'ecombrer la face arrière du moyen de maintien des échantillons, et il ne met en oeuvre que peu de pièces simples à réaliser et monter, et donc peu coûteuses. Toutes ces opérations préprogrammées sont automatiquement et rapidement effectuées pour pouvoir faire à bonne cadence une succession de prélèvements. Il est également prévu une remise à l'atmosphère pendant le prélèvement pour compenser le volume prélève et éviter une dépression dans le tube.

**Revendications**

1. Dispositif de prélèvement automatique de liquide dans un flacon présenté retourné en face d'une aiguille de prélèvement destinée à percer le bouchon du flacon et pénétrer dans le liquide, comportant un support mobile de stockage d'une pluralité de flacons permettant de placer un flacon en bonne position par rapport à un ensemble de perçage de bouchons, ledit ensemble comportant un bloc mobile (17) servant de support à une aiguille de prélèvement (21), qui se déplace sous l'action d'un vérin (12), un récipient de rinçage (26) étant monté de façon fixe et traversé par l'aiguille, caractérisé en ce que le bloc mobile (17) coulisse sur deux colonnes fixes de guidage (6) entre lesquelles se déplace verticalement l'aiguille de prélèvement (21) sous l'action d'un vérin (12) à transmission de mouvement horizontal et en ce qu'une entretoise fixe (23) est montée en appui sur les deux colonnes, à leur partie supérieure, et sert de support au récipient de rinçage (26).

2. Dispositif de prélèvement selon la revendication 1, caractérisé en ce que l'aiguille de prélèvement (21) présente une boutée (20) munie d'une extrémité inférieure et en ce que le bloc mobile (17) porte en son centre une cavité (28) dans laquelle se positionne cette extrémité inférieure, cette cavité se prolongeant par un puits (32) qui débouche à la partie inférieure du bloc mobile.

3. Dispositif de prélèvement selon la revendication 2, caractérisé en ce la butée de positionnement (20) est placée au fond de la cavité (28) et en ce qu'un manchon (22) de blocage d'aiguille est prévu au-dessus de cette butée.

4. Dispositif de prélèvement selon la revendication 1, caractérisé en ce qu'au moins une pièce de renvoi (8) assure la transmission du mouvement horizontal du vérin (12) au mouvement vertical du bloc mobile (17) en s'articulant sur un axe fixe (7).

5. Dispositif de prélèvement selon la revendication 4, caractérisé en ce que la pièce de renvoi (8) a une forme sensiblement triangulaire, dont chaque sommet reçoit un axe de pivotement et/ou d'articulation (7, 15, 19).

6. Dispositif de prélèvement selon la revendication 4, caractérisé en ce que l'axe fixe (7) est monté sur une potence (9) solidaire d'une platine support (5) portant les colonnes de guidage (6).

7. Dispositif de prélèvement selon les revendications 4 et 5, caractérisé en ce que chaque pièce de renvoi (8) coopère avec le bloc mobile (17) par l'intermédiaire d'un roulement (15) se logeant dans un évidement ovale (16) prévu sur la paroi latérale du bloc mobile (17).

8. Dispositif de prélèvement selon les revendications 4 et 5, caractérisé en ce que chaque pièce de renvoi (8) tourillonne sur un palier (10) vissé sur la tige mobile du vérin (12).

9. Dispositif de prélèvement selon la revendication 1, caractérisé en ce que le récipient de rinçage (26) est muni d'un orifice inférieur qui correspond à un orifice (24) prévu dans l'entretoise (23) pour le passage de l'aiguille de prélèvement (21).

10. Dispositif de prélèvement selon la revendication 1, caractérisé en ce que le récipient de rinçage se fixe sur l'entretoise (23) au-dessus d'une pièce (25) formant un guide pour l'aiguille de prélèvement (21).

**Patentansprüche**

1. Vorrichtung für die automatische Entnahme einer Flüssigkeit aus einem Behälter, der in umgekehrter Stellung vor eine Entnahme-Hohlnadel gebracht werden kann, die den Behälter-Verschluß durchbohren und in die Flüssigkeit eindringen soll, wobei die Vorrichtung eine Vielzahl von Flaschen in einem bewegbaren Haltegestell, das die Flaschen in die richtige Lage vor die Verschluß-Durchbohrungs-Einrichtung bringen kann, und einen als Träger für die Hohlnadel dienenden, unter der Einwirkung eines Druckmittelantriebs verschiebbaren Block sowie ein fest angebrachtes, mit einer Spülflüssigkeit füllbares, von der Hohlnadel durchquerbares Gefäß umfaßt, dadurch gekennzeichnet, daß der verschiebbare Block (17) auf zwei feststehenden Führungssäulen (6) gleiten kann, zwischen denen die Hohlnadel (21) unter der Wirkung des eine Horizontalbewegung erzeugenden Druckmittelantriebs (12) in vertikaler Richtung verschiebbar ist und daß ein festes Querhaupt (23) als Anschlag auf dem oberen Ende der Führungssäulen und als Träger für das Spülgefäß (26) vorgesehen ist.

2. Vorrichtung nach Anspruch 1, dadurch gekennzeichnet, daß die Hohlnadel (21) für die Entnahme der Flüssigkeit einen Anschlag (20) an ihrem unteren Ende aufweist und daß der verschiebbare Block (17) für die Lagerung dieses unteren Endes mit einem Hohlraum (28) versehen ist, der in einem Schacht (32) im unteren Teil des verschiebbaren Blocks ausmündet.

3. Vorrichtung nach Anspruch 2, dadurch gekennzeichnet, daß der Anschlag (20) für die Lagerung der Hohlnadel (21) sich auf dem Boden des Hohlraums (28) befindet, und auf diesem Anschlag eine Bremsmuffe (22) für die Hohlnadel vorgesehen ist.

4. Vorrichtung nach Anspruch 1, dadurch gekennzeichnet, daß für die Übertragung der Horizontalbewegung des Druckmittelantriebs in eine Vertikalbewegung des verschiebbaren Blockes (17) mindestens ein um eine feststehende Achse (7) schwenkbares Koppelstück (8) vorgesehen ist.

5. Vorrichtung nach Anspruch 4, dadurch gekennzeichnet, daß das Koppelstück (8) eine deutlich dreieckige Form aufweist, wobei die Ecken eine Dreh- und/oder eine Schwenkachse (7, 15, 19) aufnehmen.

6. Vorrichtung nach Anspruch 4, dadurch gekennzeichnet, daß die Festachse (7) auf einem Halteblock (9) angebracht ist, der seinerseits an einer Grundplatte (5) für die Führungssäulen (6) befestigt ist.

7. Vorrichtung nach den Ansprüchen 4 und 5, dadurch gekennzeichnet, daß jedes Koppelstück (8) mit dem verschiebbaren Block (17) über ein Lager (15) zusammenwirken kann, das in einer in der Seitenfläche des verschiebbaren Blockes befindlichen, ovalen Ausnehmung (16) vorgesehen ist.

8. Vorrichtung nach den Ansprüchen 4 und 5, dadurch gekennzeichnet, daß jedes Koppelstück (8) in einem Gabelkopf (10) drehbar ist, der an dem bewegbaren Ende des Druckmittelantriebs (12) angeschraubt ist.

9. Vorrichtung nach Anspruch 1, dadurch gekennzeichnet, daß das Spülgefäß (26) mit einer unteren Öffnung versehen ist, die einer Öffnung (24) im Querhaupt (23) für den Durchgang der Hohlnadel (21) entspricht.

10. Vorrichtung nach Anspruch 1, dadurch gekennzeichnet, daß das auf dem Querhaupt (23) angebrachte Spülgefäß (26) oberhalb einer Führung (25) für die Hohlnadel (21) befestigt ist.

**Claims**

1. An automatic sampling device for liquid in a bottle presented turned over opposite a sampling needle destined to pierce the stopper of the bottle and to penetrate into the liquid, comprising a mobile support for storing a plurality of bottles making it possible to place a bottle in a good position in relation to a stopper piercing assembly, the said assembly comprising a mobile block (17) serving as support for a sampling needle (21), which moves vertically under the action of a jack (12), a rinsing receptacle (26) being mounted in fixed manner and traversed by the needle, characterised in that the mobile block (17) slides on two fixed guidance columns (6) beween which the sampling needle (21) moves under the action of a jack (12) having transmission of horizontal movement and in that a fixed strut (23) is mounted and supported on the two columns, at their upper part, and serves as support for the rinsing receptacle (26).

2. A sampling device according to claim 1, characterised in that the sampling needle (21) has a stop (20) provided with a lower extremity and in that the mobile block (17) bears in its centre a cavity (25) into which this lower extremity is positioned, this cavity being extended by a shaft (32) which opens out at the lower portion of the mobile block.

3. A sampling device according to claim 2, characterised in that the positioning stop (20) is placed at the bottom of the cavity (28) and in that a needle blocking sleeve (22) is provided above this stop.

4. A sampling device according to claim 1, characterised in that at least one return part (8) effects the transmission of the horizontal movement of the jack (12) to the vertical movement of the mobile block (17) by being hinged on a fixed axis (7).

5. A sampling device according to claim 4, characterised in that the return part (8) has a substantially triangular shape, each apex of which receives an axis of pivoting and/or of articulation (7, 15, 19).

6. A sampling device according to claim 4, characterised in that the fixed axis (7) is mounted on a bracket (9) integral with a support plate (5) bearing the guidance columns (6).

7. A sampling device according to claims 4 and 5, characterised in that each return part (8) cooperates with the mobile block (17) through the intermediary of a bearing (15) housed in an oval hollow (16) provided on the lateral wall of the mobile block (17).

8. A sampling device according to claims 4 and 5, characterised in that each return part (8) is journalled on a bearing (10) screwed onto the mobile rod of the jack (12).

9. A sampling device according to claim 1, characterised in that the rinsing receptacle (26) is provided with a lower orifice which corresponds to an orifice (24) provided in the strut (23) for the passage of the sampling needle (21).

10. A sampling device according to claim 1, characterised in that the rinsing receptacle is fixed on the strut (23) above a part (25) forming a guide for the sampling needle (21).

Fig. 1

Fig. 2

Fig. 3

_Fig. 4_

_Fig. 5_

EP 0 263 753 B1